(19) Europäisches Patentamt
European Patent Office
Office européen des brevets

(11) Numéro de publication: **0 026 687**
**B1**

(12)
# FASCICULE DE BREVET EUROPÉEN

(45) Date de publication du fascicule du brevet: **13.08.86**

(51) Int. Cl.⁴: **C 01 B 33/28,** C 04 B 28/00, C 04 B 35/00

(21) Numéro de dépôt: **80401256.5**

(22) Date de dépôt: **03.09.80**

(54) **Polymère minéral synthétique de la famille des silicoaluminates et procédé de préparation; objets moulés contenant ce polymère et procédé de préparation.**

(30) Priorité: **04.09.79 FR 7922041**
**03.09.80 FR 8018970**

(43) Date de publication de la demande:
**08.04.81 Bulletin 81/14**

(45) Mention de la délivrance du brevet:
**13.08.86 Bulletin 86/33**

(84) Etats contractants désignés:
**AT BE CH DE GB IT LI LU NL SE**

(56) Documents cité:
**DE-A-1 667 548**
**FR-A-1 213 628**
**FR-A-1 229 838**
**FR-A-1 411 753**
**FR-A-2 278 634**
**US-A-3 532 459**
**US-A-3 545 921**

**JOURNAL OF THE CHEMICAL SOCIETY, avril 1959, partie II Londres, GB R.M. BARRER et al.: "Some properties of, and a structural scheme for, the harmotome zeolites", pages 1521-1528**

(73) Titulaire: **Davidovits, Joseph, 16, rue Galilée, F-02100 Saint- Quentin (FR)**
Titulaire: **Coordination et développement de l'Innovation CORDI SA Société Anonyme, 20, rue de la Fère, F-02100 Saint Quentin (FR)**

(72) Inventeur: **Davidovits, Joseph, 16, rue Galilée, F-02100 Saint Quentin (FR)**

(74) Mandataire: **Kyle, Diana, ELKINGTON AND FIFE High Holborn House 52/54 High Holborn, London WC1V 6SH (GB)**

**EP 0 026 687 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

L'invention a pour objet l'utilisation d'une réaction de polycondensation minérale de mélanges réactionnels à base de silico-aluminates alcalins, pour fabriquer, à basse température en principe inférieure à 120°C, des objets minéraux moulés contenant un polymère minéral de la famille des silico-aluminates et différentes charges minérales.

La réaction de polycondensation minérale est voisine de celle qui est à l'origine de la synthèse de produits minéraux bien particuliers: les zéolithes synthétiques ou tamis moléculaires. Ces produits ont une structure tri-dimensionnelle très caractéristique qui est une succession d'assemblage de tétraèdres $TO_4$ (où T=Si, Al, Ga, P) formant des canaux et cavités de dimensions régulières. Ces dimensions sont équivalentes à celles de la plupart des molécules organiques, ce qui explique l'utilisation de ces structures minérales pour filtrer les particules organiques de différentes dimensions. En plus, ces structures particulières sont utilisées pour leurs propriétés échangeuses d'ions. Elles ont une action catalytique certaine sur de nombreuses polymérisations organiques. Un grand nombre de brevets de synthése de ces zéolithes ou tamis moléculaires décrivent les processus de fabrication de ces minéraux particuliers. Une documentation générale est constituée par l'ouvrage de D. W. Dreck: "Zeolite Molecular Sieves" (Interscience Publishers John Wiley & Sons, New York 1974). Il s'agit en général d'une synthèse hydrothermale à partir d'un gel de silico-aluminate en présence de bases fortes en concentration élevée. La réaction s'effectue en vase clos, à pression et température constante, en présence d'un très large excès d'eau. En général, les conditions choisies sont la pression atmosphérique et des températures comprises entre 25°C et 120°C, et les temps de réaction sont de plusieurs dizaines d'heures. La formule chimique brute de ces zéolithes synthétiques et tamis moléculaires est:

$$M_{y/n}Al_ySi_xO_{2(x+y)},\ wH_2O$$

M étant un cation de valence n. De nombreux produits cristallins ont été obtenus par divers procédés utilisant cette synthèse hydrothermale. L'objectif de tous ces procédés est l'obtention de produits poreux, généralement en poudre, cette poudre cristalline pouvant être ensuite agglomérée par un liant. Ces produits ont en général de médiocres caractéristiques mécaniques.

Un objet de cette invention est de décrire l'utilisation de cette synthèse hydrothermale, plus précisément de cette polycondensation minérale, afin d'obtenir des produits minéraux dotés de caractéristiques techniques et mécaniques très supérieures, permettant la fabrication d'objets minéraux relativement durs (4 à 6 dans l'échelle de Mohs), stables thermiquement, d'une définition de surface très fine, pouvant être utilisés en tant qu'objet, objet d'art, matériau de construction, moule industriel, outil, au outres applications technologiques comme celle d'un liant minéral céramique. A cet effet, il a été découvert que si on ne se plaçait pas dans des conditions réactionnelles qui favorisent la cristallisation et la formation des cristaux, on aboutissait à des produits nouveaux. Ces produits nouveaux obtenus ainsi sont des polymères minéraux. La description de polymères minéraux nouveaux et leurs procédés de fabrication, est l'objet principal de cette invention. L'utilisation de ces polymères minéraux tridimensionnels pour leurs qualités particulières permettant leur emploi en tant que liant minéral est un autre objet de cette invention.

La terminologie utilisée pour ces polymères minéraux de structure tridimensionnelle, a été décrite dans les publications scientifiques suivantes: IUPAC International Symposium on Macromolecules, Stockholm 1976, Topic III, Applied Polymer Symposia; PACTEC IV, 1979, Society of Plastic Engineers, USA, Prepint page 151. Ces polymères minéraux appartiennent à la classe des polysilates de formule générale:

$$M_n(-(SiO_2)_z-AlO_2-)_n,\ wnH_2O$$

dans laquelle "z" peut être égal à 1, 2 ou 3, "M" est un cation monovalent, "n" est le degré de polymérisation. Dans le cadre de la présente invention, les polymères minéraux correspondent plus précisément à "z"=2, soit la formule générale

$$M_n(-\underset{\underset{O}{|}}{Si}-O-\underset{\underset{O}{|}}{Al}-O-\underset{\underset{O}{|}}{Si}-O-)_n,\ wnH_2O$$

c'est à dire le Poly(sialate-siloxo) ou PSS en abrégé dans ce qui suit. Dans le cadre de l'invention "M" est soit le cation sodium Na, soit le cation potassium K, ou le mélange de sodium et de potassium (Na, K), et les polymères sont appelés soit *sodium*-Poly(sialate-siloxo) ou (Na)-PSS soit potassium Poly(sialate-siloxo) ou (K)-PSS, soit sodium/potassium-Poly(sialate-siloxo) ou (Na, K)-PSS, et correspondent à la formule générale

$$(Na,\ K)_n(-\underset{\underset{O}{|}}{Si}-O-\underset{\underset{O}{|}}{Al}-O-\underset{\underset{O}{|}}{Si}-O-)_n,\ wnH_2O$$

En général, lorsqu'il s'agit de caractériser une espèce chimique bien particulière, outre l'analyse

chimique, il est préférable d'utiliser aussi les diagrammes de diffraction aux Rayons X. Le (Na, K)-PSS, possède un diagramme de diffraction aux Rayons X très particulier, bien que les intensités soient toujours relativement faibles, et qui est voisin de celui de certains minéraux naturels zéolithes repondant à la formule générale des Polysialates comme:

| | |
|---|---|
| la *Gmelinite* | $(Na)_8(AlO_2)_8(SiO_2)_{16} \cdot 24H_2O$ |
| l'*Analcime* | $(Na)_8(AlO_2)_8(SiO_2)_{16} \cdot 8H_2O$ |
| la *Phillipsite* | $(Na, K)_{10}(AlO_2)_{10}(SiO_2)_{22} \cdot 20H_2O$ |
| la *Gismondine* | $(Ca)_4(AlO_2)_8(SiO_2)_8 \cdot 16H_2O$ |
| l'*Harmotome* et la *Garronite*. | |

Ces minéraux naturels ont une structure tridimensionnelle très voisine l'une de l'autre, les différences observées dans les diagrammes de Rayons X provenant de ce que chaque minéral cristallise dans un système différent. On a groupé dans le Tableau A, les diagrammes de ces minéraux reproduits d'après les tableaux de D. W. Breck, pages 209—241, ainsi que les diagrammes de deux zéolithes de synthèse appelées *Zéolithe S* et *Zéolithe P*, et aussi le diagramme aux R.X. obtenu pour les premiers polymères *(Na, K)-PSS* selon l'invention. Ces diagrammes du (Na, K)-PSS furent obtenus selon la méthode simple des poudres de Debye-Scherrer, raie K alpha du Cuivre, petite chambre de rayon 38,7 mm.

Le diagramme pour le (Na, K)-PSS est très proche, mais différent de celui de la Gmelinite et de la Zéolithe S décrite dans le brevet US 3.054657. Ainsi pour la Zéolithe S on trouve des raies intenses aux distances de 7.16/5.03/4.50/4.12 Angstroms. Il existe aussi une différence fondamentale entre le mode de préparation de la Zéolithe S décrite dans le brevet US 3.054657 et le (Na, K)-PSS objet de l'invention.

Comme on peut le voir dans le tableau B, les rapports molaires entre les différents réactifs sont totalement différents:

TABLEAU A

| Analcime | | Gismondine | | Gmelinite | | Harmotome | | Philipsite | | Garronite | | Zéolithe S | | Zéolithe P | | (Na, K)PSS | |
|---|---|---|---|---|---|---|---|---|---|---|---|---|---|---|---|---|---|
| d(A) | I | d(A) | I | d(A) | I | d(A) | I | d(A) | I | d(A) | I | d(A) | I | d(A) | I | d(A) | I |
| 6.87 | 10 | 9.99 | 2 | 11.95 | 70 | 8.10 | 40 | 8.19 | 5 | 7.15 | ms | 11.88 | 77 | 7.10 | 55 | 11.20 | flou et large |
| 5.61 | 80 | 7.28 | 16 | 7.69 | 50 | 7.16 | 50 | 7.19 | 100 | 4.95 | ms | 7.73 | 19 | 5.01 | 35 | | |
| 4.86 | 40 | 5.76 | 4 | 6.81 | 40 | 6.38 | 100 | 6.41 | 12 | 4.12 | s | 7.16 | 100 | 4.10 | 55 | 4.30 | m |
| 3.67 | 20 | 5.01 | 4 | 5.98 | 10 | 5.03 | 40 | 5.37 | 10 | 4.07 | m | 5.96 | 9 | 3.16 | 100 | 3.43 | F |
| 3.43 | 100 | 4.91 | 16 | 5.06 | 50 | 4.30 | 40 | 5.06 | 25 | 3.22 | m | 5.03 | 72 | 2.67 | 55 | 3.29 | F |
| 2.92 | 80 | 4.67 | 4 | 4.52 | 20 | 4.08 | 60 | 4.98 | 17 | 3.14 | s | 4.50 | 40 | 2.52 | 5 | 3.08 | m |
| 2.80 | 20 | 4.47 | 4 | 4.09 | 80 | 3.90 | 30 | 4.31 | 10 | 2.88 | w | 4.12 | 79 | 2.36 | 7 | 2.97 | m |
| 2.69 | 50 | 4.27 | 35 | 3.44 | 20 | 3.24 | 60 | 4.13 | 40 | 2.68 | vw | 3.97 | 20 | 2.05 | 5 | 2.71 | f |
| 2.50 | 50 | 4.19 | 12 | 3.22 | 50 | 3.17 | 60 | 4.07 | 13 | 2.54 | vw | 3.44 | 62 | 1.96 | 10 | 2.46 | f |
| 2.42 | 30 | 3.34 | 100 | 2.95 | 60 | 3.13 | 80 | 3.26 | 30 | 2.34 | w | 3.30 | 13 | 1.77 | 7 | 2.30 | m |
| 2.22 | 40 | 3.19 | 18 | 2.84 | 50 | 3.08 | 40 | 3.19 | 85 | 2.52 | w | 3.23 | 23 | 1.71 | 7 | 2.11 | f |
| 2.02 | 10 | 3.13 | 14 | 2.67 | 50 | 2.92 | 20 | 3.14 | 34 | 2.12 | vw | 2.97 | 80 | 1.66 | 7 | 1.92 | TF |
| 1.90 | 50 | 2.74 | 14 | 2.57 | 10 | 2.84 | 20 | 2.93 | 14 | 2.05 | vw | 2.85 | 47 | | | 1.81 | m |
| 1.86 | 40 | 2.70 | 18 | 2.29 | 20 | 2.73 | 60 | 2.75 | 21 | 1.97 | w | 2.69 | 19 | | | | |
| 1.74 | 60 | 2.66 | 10 | 2.07 | 40 | 2.69 | 60 | 2.69 | 34 | 1.93 | w | 2.60 | 39 | | | | |
| 1.71 | 30 | 2.46 | 8 | 1.94 | 10 | 2.67 | 70 | 2.66 | 9 | 1.80 | w | 2.08 | 39 | | | | |
| 1.68 | 40 | 2.28 | 6 | 1.90 | 10 | 2.63 | 20 | 2.57 | 6 | | | 1.91 | 12 | | | | |
| 1.62 | 20 | 2.24 | 4 | 1.80 | 40 | 2.53 | 20 | 2.54 | 8 | | | 1.80 | 40 | | | | |
| 1.59 | 30 | 2.13 | 6 | 1.72 | 40 | 2.37 | 20 | 2.38 | 8 | | | 1.72 | 32 | | | | |

TABLEAU B

| Zéolithe S | | (Na, K)-PSS | |
|---|---|---|---|
| $Na_2O/SiO_2$ | 0,3 à 0,6 | $(Na_2O, K_2O)/SiO_2$ | 0,25 à 0,28 |
| $SiO_2/Al_2O_3$ | 6 à 25 | $SiO_2/Al_2O_3$ | 4,0 |
| $H_2O/Na_2O$ | 18 à 100 | $H_2O/(Na_2O, K_2O)$ | 16 à 17,5 |
| $Na_2O/Al_2O_3$ | 1,8 à 15 | $(Na_2O, K_2O)/Al_2O_3$ | 1,0 à 1,14 |

A la connaissance de la demanderesse, le diagramme de Rayons X du (Na, K)-PSS dans le Tableau A, pourrait être interpreté comme indiquant la présence d'un mélange de (Na, K)-PSS cristallise, dans deux systèmes différents, celui de la Gmelinite et celui de l'Analcime.

Pour prépare le (Na, K)(Polysialate-siloxo) ou (Na, K)-PSS, on utilise un mélange réactionnel acqueux de silico-aluminate de sodium et/ou de potassium, tel que la composition du mélange réactionnel exprimée par le rapport en moles des oxydes, corresponde aux valeurs indiquées dans le Tableau C.

TABLEAU C

| | |
|---|---|
| $(Na_2O, K_2O)/SiO_2$ | 0,20 à 0,28 |
| $SiO_2/Al_2O_3$ | 3,5 à 4,5 |
| $H_2O/(Na_2O, K_2O)$ | 15,0 à 17,5 |
| $(Na_2O, K_2O)/Al_2O_3$ | 0,8 à 1,20 |

La méthode ordinaire de préparation de ce mélange qui par polycondensation produit le (Na, K)-PSS, consiste à mélanger un oxyde alumino-silicate dans une solution acqueuse de silice colloidale ou de polysilicate alcalin, avec les bases fortes NaOH, KOH. Cet oxyde alumino-silicate $(Si_2O_5, Al_2O_2)_n$, est prépare à partir d'un polyhydroxy-aluminosilicate $(Si_2O_5, Al_2(OH)_4)_n$ dans lequel le cation aluminium se trouve en position octaédrique et est hexacoordonné. Par déshydroxylation à une température comprise entre 550°C et 800°C, le polyhydroxy-aluminosilicate se transforme en un oxyde aluminosilicate extrèmement réactif $(Si_2O_5, Al_2O_2)_n$ dans lequel le cation aluminium est tétracoordonné. Les polyhydroxy-aluminosilicates pouvant servir de matière première sont les minéraux répondant à la classe des minéraux argileux à 7 Angstrôms, et possédant au moins un cation aluminium dans la couche octaédrique sousjascente à la couche tétraédrique du cation silicium, comme par exemple les minéraux naturels: alushite, carnat, china clay, lithomarge, néokaolin, parakaolinite, pholénite, endellite, glossecollite, halloysite hydraté, milanite, berthiérine, fraigonite, grovénite, amésite, chamoisite.

Les quantités en produit intervenant dans la réaction, à savoir la silice colloidale et/ou le polysilicate alcalin, et les alcalis NaOH, KOH, correspondent à celles données par le Tableau C. On utilisera de préférence un rapport proche de 1 pour $(Na_2O, K_2O/Al_2O_3$ et un rapport proche de 4 pour $SiO_2/Al_2O_3$. Un rapport plus grand se traduit par une alcalinité libre des minéraux synthétisés et par des migrations d'alcali-silicate qui peuvent perturber les propriétés physiques, chimiques et mécaniques des matériaux et objets ainsi réalisés. Un rapport trop petit, par exemple inférieur respectivement à 0,8 et à 3,5 se traduit par la présence, dans le polymère minéral (Na, K)-PSS, d'une poudre blanche qui pourrait être un hydrate de l'oxyde alumino-silicate en excès. On préfèrera donc des rapports molaires proches des quantités stoechiométriques, ce qui est bien différent des procédés de fabrication des zéolithes synthétiques et tamis moléculaires, qui indiquent tous des rapports molaires très supérieurs aux quantités stoechiométriques, comme l'indique l'exemple du Tableau B.

La composition chimique du (Na, K)-PSS polycondensé, exprimée en terme d'oxyde est:

$$1,0\pm0,2(yNa_2O, zK_2O):Al_2O_3:xSiO_2:wH_2O$$

dans laquelle, sous la forme entièrement hydratée, "w" a une valeur inférieure ou égale à 7, "x" une valeur comprise entre 3,5 et 4,5, "y" et "z" une valeur égale ou inférieure à 1 telle que la somme de "y" et "z" soit égale à 1.

Le mélange réactionnel correspondant au Tableau C est visqueux, ce n'est pas un gel. La valeur expérimentale $H_2O$ est égale à l'eau présente, en tant que solvant dans le mélange réactionnel, ajoutée à l'eau de constitution chimique des composés. Le mélange réactionnel se comporte comme une résine minérale ayant des propriétés rhéologiques intéressantes lorsque on le laisse maturer pendant environ 1 heure à température ambiante, par exemple 25°C. Après cette maturation, cette résine minérale est utilisée soit telle quelle, soit avec des charges minérales et/ou organiques, soit en tant que liant ou ciment de produits minéraux et/ou organiques. La masse qui en résulte est alors introduite dans un moule, soit par simple coulée si le mélange est suffisamment fluide, soit par tassement, soit par pression ou vibration, ou

autre moyen mécanique ou physique, puis l'ensemble est durci, soit à la température ambiante, soit à une température au plus égale à 120°C, de préférence comprise entre 60°C et 95°C.

Après polycondensation, l'objet minéral est sorti du moule ou de l'empreinte puis séché à une température inférieure à 100°C. Les temps de durcissement ou de polycondensation, et de séchage, sont évidemment fonction de la température et de la technique de chauffage. A la température ambiante de 25°C, le temps de durcissement est de 15 heures environ; à 50°C de 4 heures; à 85°C de 1 h 30 mn; à 90°C de 0 h 30 mn. On peut utiliser également d'autres modes de chauffage, comme la haute fréquence, les micro-ondes, l'effet Joule, la résistance électrique noyée dans le mélange réactionnel. Ces temps de polycondensation et de séchage seront alors plus rapides. Ainsi l'utilisation des micro-ondes permet de durcir le mélange réactionnel décrit dans l'exemple 1) suivant, en 30 secondes au lieu de 1 h 30 mn.

L'ordre d'introduction des différents réactifs dans les mélanges réactionnels est important, surtout si l'on veut donner à la résine minérale une durée de vie en pot (potlife) très longue, par exemple 2 à 4 heures dans un atelier. Les applications industrielles de l'invention s'en trouvent grandement facilitées. Il est pour cela nécessair d'éviter le contact direct des bases fortes NaOH/KOH avec l'oxyde alumino-silicate ($Si_2O_5$, $Al_2O_2$)$_n$. En effet, il se produit alors une polycondensation différente de celle décrite ici, en particulier la substance obtenue consiste en un mélange formé par un polysialate simple

```
(—Si—O—Al—O—)n
   |     |
   O     O
```

du type de la Zéolithe A ou de l'hydroxy-sodalite

$$(Na_2O{:}2SiO_2{:}Al_2O_3{:}wH_2O)$$

Pour obtenir l'objet de l'invention, c'est à dire la formation du (Na, K)Poly(sialate-siloxo) ou (Na, K)-PSS de formule

```
(Na, K)n(—Si—O—Al—O—Si—O—)n, wnH2O
           |     |     |
           O     O     O
```

il est nécessaire de masquer soit l'oxyde alumino-silicate, soit KOH ou NaOH. Le masquage de KOH ou NaOH a lieu par la préparation d'une solution fortement alcaline du polysilicate intervenant dans la réaction. On ajoute ensuite dans cette solution alcaline l'oxyde alumino-silicate qui s'y trouve ainsi dissout. Une autre méthode de l'invention consiste au contraire à masquer l'oxyde alumino-silicate par une solution de polysilicate alcalin, puis à mélanger dans ce mélange la solution concentrée de KOH ou de NaOH. Cette dernière méthode possède l'avantage de pouvoir réaliser l'objet de l'invention à partir de deux mélanges stables dans le temps, permettant le stockage et les facilités de manipulation. La résine minérale obtenue en laissant maturer le mélange réactionnel pendant au moins 1 heure à température ambiante, ou le mélange résine minérale plus charges, ou le mélange charges plus résine minérale (liant) sont placés dans un moule de préférence fermé.

La réaction de polycondensation s'effectue dans des conditions hydrothermales, et il est nécessaire de conserver toute l'eau présente dans le milieu réactionnel. On évitera donc toute évaporation superficielle soit en utilisant un moule fermé, soit en le recouvrant avec tout moyen de protection évitant l'évaporation de l'eau, comme un film plastique ou une fine couche d'une substance hydrophobe. Après avoir durci dans le moule, on sépare le son moule le solide ainsi obtenu, et on le sèche. L'objet moulé ainsi obtenu est doté de propriétés physiques et mécaniques très intéressantes pour les applications technologiques de l'invention. En particulier, la définition ultra-fine de la surface de l'objet obtenu permet une reproduction fidèle extrêmement précise de tous les détails, même les plus fins, de l'empreinte et du moule. Cette précision de la reproduction est comparable à celle obtenue avec des résines organiques utilisées couramment dans la reproduction et le moulage, comme les résines époxy et oplyuréthanes, mais dans le cas de l'invention la dureté de surface de l'objet est égale à 4 à 6 dans l'échelle de Mohs, contre au maximum 2 à 3 pour les résines organiques.

Les exemples qui suivent illustrent les procédés de préparation des nouveaux polymères minéraux (Na, K)Poly(sialate-siloxo) ou (Na, K)-PSS et ils permettent de décrire certaines de leurs propriétés.

Exemple 1)

On prépare 317 grammes d'un mélange réactionnel contenant:

$H_2O$:8,1 moles; $Na_2O$:0,47 moles; $SiO_2$:1,65 moles; $Al_2O_3$:0,41 moles. $Al_2O_3$ provient de l'oxyde alumino-silicate obtenu par déshydroxylation d'un polyhydroxy-alumino-silicate naturel $(Si_2O_5, Al_2(OH)_4)_n$ et $SiO_2$ provient également de cet oxyde alumino-silicate et d'une solution de silicate alcalin. $Na_2O$ provient de la soude NaOH anhydre pure.

Le rapport molaire des oxydes réactionnels est donné par le Tableau D:

TABLEAU D

| | |
|---|---|
| $Na_2O/SiO_2$ | 0,28 |
| $SiO_2/Al_2O_3$ | 4,02 |
| $H_2O/Na_2O$ | 17,2 |
| $Na_2O/Al_2O_3$ | 1,14 |

Le mélange qui est laissé maturer pendant environ 1 heure à température ambiante (25°C), a la viscosité d'une résine. A cette résine maturée en ajoute 50 grammes de *quartz* de granulométrie inférieure à 50 microns et 50 grammes de *calcite* de granulométrié inférieure à 120 microns. Le mélange est ensuite dégazé sous une cloche à vide afin d'enlever les bulles d'air incluses pendant l'opération de mélange. La résine est ensuite coulée, en évitant la formation de bulles d'air, dans un moule en polyuréthane reproduisant une médaille. La couche supérieure de la masse est recouverte par un film de polyéthylène, et l'ensemble est porté à 85°C dans une étuve, pendant 1 h 30 min. On démoule un objet représentant avec beaucoup de finesse la médaille. Après sèche à 85°C, la densité du produit obtenu est de 1,7 grammes par millilitre, la dureté égale à 4 dans l'échelle de Mohs; il est blanc, légèrement poreux, et ses dimensions indiquent que la polycondensation s'est effectuée pratiquement sand retrait. En plus de quartz et de la calcite l'analyse physico-chimique donne une composition molaire de:

$$1{,}14Na_2O:Al_2O_3:4SiO_2:5H_2O$$

correspondant à la formule du (Na)-PSS

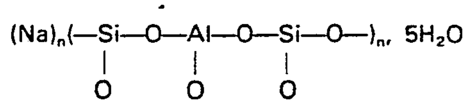

Le diagramme aux Rayons X indique les raies du quartz et de la calcite, et celles du (Na, K)-PSS données par le Tableau A.

Les matériaux constituant les moules peuvent être variés, car à l'exception de l'aluminium et du cuivre, le (Na, K)-PSS n'adhère sur aucune surface. Les matériaux constituant les moules peuvent être: le papier, le carton, le bois, les matières plastiques, le plâtre, le fer, l'acier, sans pour cela être limitatif pour l'emploi d'autres matériaux. En effet il suffit simplement de recouvrir le moule en aluminium ou en cuivre d'une fine couche de peinture ou de résine organique, pour pouvoir également utiliser ces matériaux. Le polymère minéral (Na, K)-PSS peut également constituer un moule, car nous avons constaté, avec surprise, qu'il n'y avait pas d'adhérence entre un (Na, K)-PSS déjà polycondensé, et un (Na, K)-PSS en cours de polycondensation.

Exemple 2)

Reprenons le mélange réactionnel de l'Exemple 1), mais ajoutons à la résine maturée, 100 grammes de *mullite* de granulométrie inférieure à 120 microns et 100 grammes de *calcite* de granulométrie inférieure à 120 microns. On moule ce mélange dans la même empreinte et selon les mêmes conditions que celles décrites dans l'Exemple 1). L'examen aux Rayons X est effectué à l'aide d'une technique plus précise, à savoir l'enregistrement de la courbe téta/2 tétas, avec comme longueur d'onde d'émission la raie du Cobalt à 1,79 angstroms. Outre les raies de la mullite et de la calcite, on distingue des raies à 4.50/4.23/4.086/3.34/2.85/2.66/1.925/1.89 Angstroms, et surtout une zone comprise entre 10.1 et 11.5 Angstroms. Ce diagramme peut faire penser à la présence de (Na, K)-PSS cristallisé dans deux systèmes différents, celui de la Gmelinite (rais à 11.50/4.50/4.086.2.85/2.66 Angstroms) d'une part, de la Gismondine (raies à 10.10/4.23 Angstroms) d'autre part. Les autres raies sont masquées par les raies très fortes de la mullite et de la calcite, en particulier celles pouvant déceler la présence d'une structure du type Analcime.

Exemple 3)

Selon la technique décrite dans l'Exemple 1), on prépare 296 grammes d'un mélange réactionnel contenant:

$H_2O$:7,5 moles; $Na_2O$:0,33 moles; $K_2O$:0,08 moles; $SiO_2$:1,65 moles; $Al_2O_3$:0,41 moles.

$K_2O$ provient de potasse KOH pure anhydre.

Le rapport molaire des oxydes réactionnels est donné par le Tableau E:

TABLEAU E

| | | |
|---|---|---|
| $(Na_2O, K_2O)/SiO_2$ | 0,25 | |
| $SiO_2/Al_2O_3$ | 4,02 | |
| $H_2O/(Na_2O, K_2O)$ | 17,3 | |
| $Na_2O/Al_2O_3$ | 0,8 | $(Na_2O, K_2O)/Al_2O_3=1,0$ |
| $K_2O/Al_2O_3$ | 0,2 | |

Le mélange a la viscosité d'une résine après la maturation pendant environ 1 heure à la température ambiante. On y ajoute 100 grammes de *quartz* de granulométrie inférieure à 120 microns, 300 grammes de *silex* broyé de granulométrie comprise entre 0,5 mm et 1,5 mm, 100 grammes de *calcite* de granulométrie inférieure à 120 microns. Le mélange augmente de viscosité, mais reste suffisamment manipulable pour être coulé dans un moule reproduisant l'empreinte de la médaille de l'Exemple 1). Après 1 h 30 min de polycondensation à 85°C et séchage dans les mêmes conditions que celles décrite dans l'Exemple 1), l'objet démoulé a une densité de 2,2 grammes par millilitre et une dureté de 5 dans l'échelle de Mohs. Il a un diamètre de 85,8 mm alors que l'empreinte a un diamètre de 85,4 mm. Cette différence s'explique par le fait que ayant utilisé un moule en plastique, les dimensions de ce moule sont de 85,8 mm à 85°C, température de la polycondensation de la résine minérale. La reproduction de la médaille est aussi précise que dans l'Exemple 1).

L'analyse physico-chimique indique que le produit obtenu est un mélange de quartz (silex), calcite et de (Na, K)-PSS de composition molaire:

$$0,8Na_2O:0,2K_2O:4,02SiO_2:Al_2O_3:5H_2O$$

Le diagramme des poudres Debye-Scherrer aux Rayons X comporte les raies du quartz, de la calcite, et les raies du (Na, K)-PSS données par le Tableau A.

Exemple 4)

On reprend le mélange réactionnel de l'Exemple 3), mais on ajoute après la maturation d'environ 1 heure à la température ambiante: 100 grammes de *fluorure de calcium* $F_2Ca$ en poudre, 100 grammes de *quartz*, et on prépare une médaille selon la technique décrite dans les exemples précédents. L'analyse physico-chimique du produit obtenu indique la présence d'un mélange de fluorure de calcium, de quartz et de (Na, K)-PSS de composition selon l'Exemple 3). Par contre le diagramme aux Rayons X obtenu par enregistrement téta/2 tétas avec la longueur d'émission du Cobalt à 1,79 A, indique la présence de nombreuses raies faiblement intenses à:

11.53/10.10/8.39/7.90/7.16/6.479/5.02/4.73/4.50/4.42/4.027/3.77/3.66/3.51/
3.48/3.30/3.06/2.97/2.90/2.88/2.62/2.58/2.56/2.389/2.279/2.24/2.162/2.126.

En complément aux raies intenses du quartz et de fluorure de calcium. Ce diagramme suggère la présence de (Na, K)-PSS ayant cristallisé dans 3 systèmes différents à savoir du type de la Gismondine, de la Gmelinite et de la Phillipsite.

Les charges minérales ajoutées après la maturation du mélange réactionnel sembleraient avoir une certaine influence sur le mode de cristallisation du (Na, K)-PSS sans que cela semble modifier très sensiblement les propriétés macroscopiques, mécaniques et physiques, des objets moulés obtenus. C'est ainsi que l'addition dans le mélange réactionnel de l'Exemple 3), après maturation, d'un minéral comme le *disthène* ou *kyanite* ($Al_2SiO_5$) en poudre, provoque l'apparition d'une raie très nette à 10.10 A et à 3.43 A, qui semblerait correspondre à la présence d'une cristallisation sous deux formes, celle de la Gismondine et celle de l'Analcime.

Exemple 5)

On prépare 305,5 grammes d'un mélange réactionnel contenant:

$H_2O$:7,5 moles; $Na_2O$:0,246 moles; $K_2O$:0,164 moles; $SiO_2$:1,65 moles; $Al_2O_3$:0,41 moles.

Les réactifs sont ceux indiqés dans les exemples 1) et 3). Le rapport molaire des oxydes réactionnels est donné par le Tableau F:

TABLEAU F

| | | |
|---|---|---|
| $(Na_2O, K_2O)/Al_2O_3$ | 0,25 | |
| $SiO_2/Al_2O_3$ | 4,02 | |
| $H_2O/(Na_2O, K_2O)$ | 17,30 | |
| $Na_2O/Al_2O_3$ | 0,6 | $(Na_2O, K_2O)/Al_2O_3=1,0$ |
| $K_2O/Al_2O_3$ | 0,4 | |

Directement dans le mélange réactionnel, c'est à dire avant la maturation, on ajoute 90 grammes de *muscovite* de granulométrie inférieure à 120 microns, et après maturation pendant au moins 1 heure à température ambiante, on prépare une médaille selon la technique décrite dans les exemples précédents. L'analyse physico-chimique du produit indique la présence de muscovite et de (Na, K)-PSS, mais l'examen aux Rayons X, soit par la technique Debye-Scherrer, soit par l'enregistrement téta/2 tétas, ne permet pas de déterminer l'influence de la muscovite sur le système de cristallisation de (Na, K)-PSS. En effet, les raies propres à la muscovite sont très intenses et très nombreuses, et elles recouvrent pratiquement toutes les raies pouvant provenir d'une des formes cristallines de (Na, K)-PSS.

On peut faire varier les rapports de $Na_2O/Al_2O_3$ et $K_2O/Al_2O_3$ entre zéro et un, de telle sorte que leur somme soit égale à 1, et obtenir ainsi des Poly(sialate-siloxo) de formule:

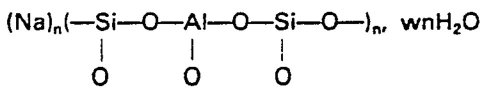

(Na)-PSS)

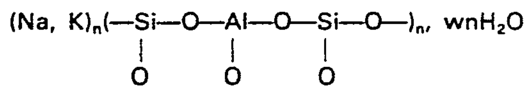

(Na, K)-PSS

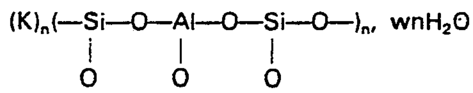

(K)-PSS

Les trois types de polymère peuvent être préparés et utilisés selon l'invention. La présente invention consiste donc en un polymère minéral de la famille des silico-aluminates, caractérisé en ce que sa composition exprimée en terme des oxydes est:

$$1,0\pm0,2(yNa_2O, zK_2O):Al_2O_3:xSiO_2:wH_2O$$

dans la forme entièrement hydratée de laquelle "w" est une valeur inférieure ou égale à 7, "x" est une valeur comprise entre 3,5 et 4,5, "y" et "z" ont une valeur égale ou inférieure à 1 telle que la somme de y et z est égale à 1, le dit polymère correspondant à la formule

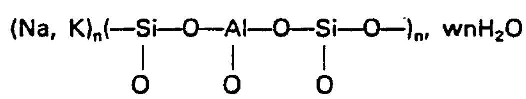

et possède le diagramme aux rayons X suivant:

| d(A) | Intensité |
|---|---|
| 11,20 | flou et large |
| 4,30 | moyenne |
| 3,43 | Forte |
| 3,29 | Forte |
| 3,08 | moyenne |
| 2,97 | moyenne |
| 2,71 | faible |
| 2,46 | faible |
| 2,30 | moyenne |
| 2,11 | faible |
| 1,92 | Très Forte |
| 1,81 | moyenne |

le dit diagramme étant le résultat d'une cristallisation dans au moins une des structures de type Analcime, Gmelinite, Garronite, Harmotone, Gismondine et Phillipsite. Le système de cristallisation dans l'un ou plusieurs systèmes semble être influencé par la nature de la charge minérale ajoutée au mélange réactionnel.

Néanmoins la demanderesse à constaté que la durée de vie (potlife) du mélange réactionnel était plus longue avec un Poly(sialate-siloxo) du type (Na, K)-PSS qu'avec les deux extrèmes (Na)-PSS et (K)-PSS. Aussi, dans la pratique, on préfèrera, pour certaines applications, comme le fabrication de moules et outils industriels, utiliser des mélanges réactionnels dans lesquels le rapport $Na_2O/Al_2O_3$ peut varier entre 0,8 et 0,5, et le rapport $K_2O/Al_2O_3$ peut varier entre 0,2 et 0,5, la somme des deux rapports molaires étant égale à 1.

L'analyse thermopondérale du (Na, K)-PSS indique la présence de deux accidents endothermiques, l'un entre 150°C et 200°C environ, l'autre entre 320°C et 370°C environ. Le premier accident endothermique correspond au départ de l'eau dite zéolithique et s'accompagne d'une perte de poids de 9%. Le second accident endothermique entre 320°C et 370°C correspond au départ des fonctions hydroxyles —OH, soit une perte de poids de 12%.

L'objet moulé minéral réalisé selon l'invention est doté d'une caractéristique physico-chimique particulière de cette classe de polymères minéraux proche de la famille des zéolithes. Bien que le pH de la matière (Na, K)-PSS soit égal à 9,5—10, montrant ainsi qu'il n'y a pas d'alcali libre, il y a migration des cations Na et K, en présence d'eau. Ce comportement subsiste tant que l'objet n'a pas été traité à une température égale ou supérieure à la température du 2° accident endothermique, 370°C environ. Si ce traitement thermique est appliqué, les cations Na et K sont fixés et ne migrent plus en présence d'eau. Le polymère minéral Poly(sialate-siloxo) est ainsi déshydraté et déshydroxylé et est transformé en un produit ayant des qualités équivalentes ou supérieures à celles des matériaux céramiques, en particulier une excellente stabilité thermique.

Exemple 6)

On introduit dans un mélangeur 1 kilogramme de sable pour fondérie. Puis on ajoute 50 grammes, soit 5% par rapport au poids du sable, de la résine minérale obtenue après maturation pendant environ 1 heure du mélange réactionnel de l'Exemple 3). Le mélange ainsi obtenu est tassé dans deux moules. Un moule est destiné à subir la polycondensation à 85°C en 1 h 30 min, l'autre est laissé à température ambiante pendant 15 heures environ. On obtient, après démoulage, deux noyaux de fonderie dans lesquels le sable a été aggloméré avec un liant minéral identique au (Na, K)-PSS de l'Exemple 3).

Les mélanges réactionnels silico-aluminates décrits dans cette invention, constituent après maturation une résine minérale pouvant être utilisée soit seule, soit avec des charges minérales et/ou organiques soit en tant que liant ou ciment. La polycondensation ou durcissement se fait soit à la température ambiante, soit est accélérée jusqu'à une température de 120°C. On obtient alors un polymère minéral du type Polysialate-siloxo), (Na, K)-PSS. Toutes charges minérales et/ou organiques ainsi que des produits auxilliaires compatibles avec les conditions réactionnelles décrites dans l'invention, peuvent être ajoutées

dans le mélange réactionnel silico-aluminate. Nous citerons, sans limitation d'aucune sorte, les colorants et pigments, les agents favorisant le débullage, les fibres de renforcement, les agents hydrofugeants.

Les objets moulés réalisés à l'aide de l'invention ont des utilisations multiples selon la caractéristique physique, mécanique au chimique, mise en jeu, dans l'industrie, le bâtiment, la décoration, sous forme d'objet, de moule, d'outil, de bloc, de panneau. Ils peuvent subir multiples traitements physico-chimiques, physiques ou mécaniques, postérieurs, ainsi que des opérations d'apprêt ou de finition, de bouchage de la porosité. Si nécessaire, ils subiront un traitement de stabilisation thermique à une température au moins égale à 370°C environ, les transformant en produits ayant des qualités céramiques, en particulier une excellente stabilité thermique et dimensionnelle.

**Revendications**

1. Polymère minéral de la famille des silico-aluminates, caractérisé en ce que sa composition exprimée en terme des oxydes est:

$$1,0\pm0,2(yNa_2O,\ zK_2O):Al_2O_3:xSiO_2:wH_2O$$

dans la forme entièrement hydratée de laquelle "w" est une valeur inférieure ou égale à 7, "x" est une valeur comprise entre 3,5 et 4,5, "y" et "z" ont une valeur égale ou inférieure à 1 telle que la somme de y et z est égale à 1, le dit polymère correspondant à la formule

$$(Na,\ K)_n(—Si—O—Al—O—Si—O—)_n,\ wnH_2O$$

(avec un O relié sous chacun des atomes Si, Al et Si)

et possède le diagramme aux rayons X suivant:

| d(Å) | Intensité |
|---|---|
| 11,20 | flou et large |
| 4,30 | moyenne |
| 3,43 | Forte |
| 3,29 | Forte |
| 3,08 | moyenne |
| 2,97 | moyenne |
| 2,71 | faible |
| 2,46 | faible |
| 2,30 | moyenne |
| 2,11 | faible |
| 1,92 | Très Forte |
| 1,81 | moyenne |

le dit diagramme étant le résultat d'une cristallisation dans au moins une des structures de type Analcime, Gmelinite, Garronite, Harmotone, Gismondine et Phillipsite.

2. Procédé de préparation d'un polymère minéral selon 1, caractérisé en ce qu'il consiste à préparer un mélange aqueux de silico-aluminate alcalin, tel que les rapports molaires des produits réactionnels exprimés en terme d'oxyde soient compris ou égaux aux valeurs suivantes:

| | |
|---|---|
| $(Na_2O,\ K_2O)/SiO_2$ | 0,20 à 0,28 |
| $SiO_2/Al_2O_3$ | 3,5 à 4,5 |
| $H_2O/(Na_2O,\ K_2O)$ | 15 à 17,5 |
| $(Na_2O,\ K_2O)/Al_2O_3$ | 0,8 à 1,20 |

puis à laisser maturer le mélange pendant au moins 1 heure à température ambiante.

3. Procédé de préparation d'un polymère minéral selon 1 ou 2, caractérisé en ce que après la maturation, le mélange réactionnel est placé dans un moule et que le durcissement est accéléré en portant l'ensemble à une température inférieure à 120°C, de préférence comprise entre 60°C et 95°C.

4. Procédé de préparation d'un objet moulé, à l'aide d'un polymère minéral selon 1 et de formule

$$Na_n(-\underset{\underset{O}{|}}{Si}-O-\underset{\underset{O}{|}}{Al}-O-\underset{\underset{O}{|}}{Si}-O-)_n,\ wnH_2O$$

caractérisé en ce qu'il consiste à préparer un mélange aqueux de silico-aluminate alcalin tel que les rapports molaires des procuits exprimés en terme d'oxyde correspondent aux valeurs suivantes:

| | |
|---|---|
| $Na_2O/SiO_2$ | 0,28 |
| $SiO_2/Al_2O_3$ | 4,02 |
| $H_2O/Na_2O$ | 17,2 |
| $Na_2O/Al_2O_3$ | 1,14 |

puis à laisser maturer à température ambiante pendant au moins 1 heure, puis à mélanger avec des charges minérales et/ou organiques, et à effectuer le durcissement dans un moule.

5. Procédé de préparation d'un objet moulé à l'aide d'un polymère minéral selon 1 et de formule

$$(Na,\ K)_n(-\underset{\underset{O}{|}}{Si}-O-\underset{\underset{O}{|}}{Al}-O-\underset{\underset{O}{|}}{Si}-O-)_n,\ wnH_2O$$

caractérisé en ce qu'il consiste à préparer un mélange aqueux de silico-aluminate alcalin tel que les rapports molaires des produits réactionnels exprimés en terme d'oxyde ont les valeurs suivantes

| | | |
|---|---|---|
| $(Na_2O,\ K_2O)/SiO_2$ | 0,25 | |
| $SiO_2/Al_2O_3$ | 4,02 | |
| $H_2O/(Na_2O,\ K_2O)$ | 17,3 | |
| $Na_2O/Al_2O_3$ | 0,8 à 0,5 | $(Na_2O,\ K_2O)/Al_2O_3=1$ |
| $K_2O/Al_2O_3$ | 0,2 à 0,5 | |

à laisser maturer à température ambiante pendant au moins 1 heure, puis à mélanger avec des charges minérales et/ou organiques, et à effectuer le durcissement dans un moule.

6. Procédé selon l'une quelconque des revendications 2, 3, 4 ou 5, caractérisé en ce que le mélange aqueux de silico-aluminate alcalin contient un oxyde alumino-silicate de formule

$$(Si_2O_5,\ Al_2O_2)_n$$

et dans lequel le cation aluminium est tétracoordonné.

7. Procédé selon 6 caractérisé en ce que l'on prépare une solution aqueuse contenant un polysilicate alcalin et de la soude NaOH, ou de la potasse KOH, ou un mélange de soude NaOH et de potasse KOH, et que l'oxyde alumino-silicate $(Si_2O_5,\ Al_2O_2)_n$ est dissout dans cette solution.

8. Procédé selon 6 caractérisé en ce que l'on prépare d'une part un mélange d'un polysilicate alcalin avec l'oxyde alumino-silicate $(Si_2O_5,\ Al_2O_2)_n$, d'autre part une solution aqueuse de soude NaOH, ou de potasse KOH, ou de soude NaOH et potasse KOH, et que l'on ajoute cette solution aqueuse au dit mélange.

9. Procédé de préparation d'objets moulés contenant un polymère minéral selon 1, et ayant des caractéristiques céramiques, caractérisé en ce que le dit polymère minéral est déshydraté et déshydroxylé à une température au moins égale à 370°C environ.

10. Objet en céramique moulé contenant un polymère minéral selon 1, obtenu selon l'une quelconques des revendications 2 à 9.

**Patentansprüche**

1. Mineralisches Polymer aus der Familie der Siliziumaluminate, dadurch gekennzeichnet, daß seine Zusammensetzung, ausgedrückt auf der Basis von Oxiden, wie folgt

$$1{,}0\pm0{,}2(yNa_2O,\ zK_2O):Al_2O_3:xSiO_2:wH_2O$$

ist, wobei in seiner vollständig hydratisierten Form "w" einen Wert kleiner oder gleich 7 aufweist, "x" einen Wert ziwschen 3,5 und 4,5 umfaßt, "y" und "z" einen Wert kleiner oder gleich 1 aufweisen, wobei die Summe von y und z gleich 1 ist, das genannte Polymer der Formel

$$(Na,\ K)_n(-\underset{\underset{O}{|}}{Si}-O-\underset{\underset{O}{|}}{Al}-O-\underset{\underset{O}{|}}{Si}-O-)_n,\ wnH_2O$$

entspricht und das folgende Röntgenstrahl-Diagramm aufweist:

| d(A) | Intensität |
|---|---|
| 11,20 | verschmiert und breit |
| 4,30 | durchschnittlich |
| 3,43 | stark |
| 3,29 | stark |
| 3,08 | durchschnittlich |
| 2,97 | durchschnittlich |
| 2,71 | schwach |
| 2,46 | schwach |
| 2,30 | durchschnittlich |
| 2,11 | schwach |
| 1,92 | sehr stark |
| 1,81 | durchschnittlich |

und wobei das vorstehende Diagramm das Resultat einer Kristallisation in wenigstens einer der Strukturen vom Typ Analcim, Gmelinit, Garronit, Harmoton, Gismondin und Phillipsit ist.

2. Verfahren zur Herstellung eines mineralischen Polymers nach Anspruch 1, dadurch gekennzeichnet, daß zunächst eine wäßrige Mischung aus alkalischem Silizium-aluminat in der Weise hergestellt wird, daß die molaren Verhältnisse der Reaktionsprodukte, ausgedrückt auf Oxidbasis, innerhalb der folgenden Werte liegen oder diesen gleich sind:

| | |
|---|---|
| $(Na_2O,\ K_2O)/SiO_2$ | 0,20 bis 0,28 |
| $SiO_2/Al_2O_3$ | 3,5 bis 4,5 |
| $H_2O/(Na_2O,\ K_2O)$ | 15 bis 17,5 |
| $(Na_2O,\ K_2O)/Al_2O_3$ | 0,8 bis 1,20 |

und daß dann die Mischung für wenigstens eine Stunde bei Zimmertemperatur altern gelassen wird.

3. Verfahren zur Herstellung eines mineralischen Polymers nach Anspruch 1 oder 2, dadurch gekennzeichnet, daß die Reaktionsmischung nach der Alterung in eine Form gebracht wird und daß die Härtung dadurch beschleunigt wird, daß sie auf eine Temperatur von weniger als 120°C, vorzugsweise zwischen 60°C und 95°C gebracht wird.

4. Verfahren zur Herstellung eines Formkörpers unter Verwendung eines mineralischen Polymers nach Anspruch 1 und der Formel

$$Na_n(-\underset{\underset{O}{|}}{Si}-O-\underset{\underset{O}{|}}{Al}-O-\underset{\underset{O}{|}}{Si}-O-)_n,\ wnH_2O$$

dadurch gekennzeichnet, daß zunänchst eine wäßrige Mischung des alkalischen Silizium-aluminats in der

Weise hergestellt wird, daß die molaren Verhältnisse der Produkte, auf Oxidbasis, den folgenden Werten entsprechen

| | |
|---|---|
| $Na_2O/SiO_2$ | 0,28 |
| $SiO_2/Al_2O_3$ | 4,02 |
| $H_2O/Na_2O$ | 17,2 |
| $Na_2O/Al_2O_3$ | 1,14 |

daß dann bei Zimmertemperatur während wenigstens einer Stunde altern gelassen wird, dann mit mineralischen und/oder organischen Füllstoffen gemischt wird und schließlich die Aushärtung in einer Form durchgeführt wird.

5. Verfahren zur Herstellung eines Formkörpers unter Verwendung eines mineralischen Polymers gemäß Ansprüch 1 und der Formel

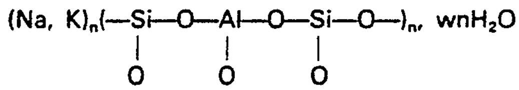

dadurch gekennzeichnet, daß zunächst eine wäßrige Mischung des alkalischen Silizium-aluminats in der Weise hergestellt wird, daß die molaren Verhältnisse der Reaktionsprodukte, ausgedrückt auf Oxidbasis, die folgenden Werte aufweisen

| | | |
|---|---|---|
| $(Na_2O, K_2O)/SiO_2$ | 0,25 | |
| $SiO_2/Al_2O_3$ | 4,02 | |
| $H_2O/(Na_2O, K_2O)$ | 17,3 | |
| $Na_2O/Al_2O_3$ | 0,8 bis 0,5 | $(Na_2O, K_2O)/Al_2O_3=1$ |
| $K_2O/Al_2O_3$ | 0,2 bis 0,5 | |

bei Raumtemperatur während wenigstens einer Stunde altern gelassen wird, dann mit mineralischen und/oder organischen Füllstoffen gemischt wird und schließlich die Härtung in einer Form durchgeführt wird.

6. Verfahren nach einem oder mehreren der Ansprüche 2, 3, 4 und 5, dadurch gekennzeichnet, daß die wäßrige Mischung des alkalischen Silizium-aluminats ein Alumino-silikat-oxid der Formel

$$(Si_2O_5, Al_2O_2)_n$$

enthält, in welcher das Aluminium-kation tetrakoordiniert ist.

7. Verfahren nach Anspruch 6, dadurch gekennzeichnet, daß man eine wäßrige Lösung, enthaltend ein alkalisches Polysilikat und Natriumhydroxid NaOH oder Kaliumhydroxid KOH oder eine Mischung aus Natriumhydroxid NaOH und Kaliumhydroxid KOH herstellt und daß Alumino-silikat-oxid $(Si_2O_5, Al_2O_2)_n$ in dieser Lösung gelöst wird.

8. Verfahren nach Anspruch 6, dadurch gekennzeichnet, daß man einerseits eine Mischung eines alkalischen Polysilikats mit Alumino-silikat-oxid $(Si_2O_5, Al_2O_2)_n$, andererseits eine wäßrige Lösung von Natriumhydroxid NaOH oder Kaliumhydroxid KOH oder von Natriumhydroxid NaOH und Kaliumhydroxid KOH herstellt und daß man diese wäßrige Lösung der vorgenannten Mischung zugibt.

9. Verfahren zur Herstellung von Formkörpern, enthaltend ein mineralisches Polymer nach Anspruch 1 und keramische Eigenschaften aufweisend, dadurch gekennzeichnet, daß das mineralische Polymer bei einer Temperatur von wenigstens gleich ca. 370°C dehydratisiert und dehydroxyliert wird.

10. Gegenstand aus geformter Keramik, enthaltend ein mineralisches Polymer gemäß Anspruch 1, erhalten gemäß einem oder mehreren der Ansprüche 2 bis 9.

## Claims

1. An inorganic polymer of the family of the silico-aluminates, characterized by the fact that its composition, expressed in terms of oxides, is:

$$1.0\pm0.2(yNa_2O, zk_2O):Al_2O_3:xSiO_2:wH_2O$$

in the fully hydrated form of which "w" has a value equal to or less than 7, "x" has a value of between 3.5 and 4.5, and "y" and "z" have a value equal to or less than 1 such that the sum of y and z is equal to 1, said polymer having the formula:

$$(Na, K)_n(-\underset{O}{\underset{|}{Si}}-O-\underset{O}{\underset{|}{Al}}-O-\underset{O}{\underset{|}{Si}}-O-)_n, wnH_2O$$

and has the following x-ray diagram:

| d(A) | intensity |
|---|---|
| 11.20 | blurred and wide |
| 4.30 | average |
| 3.43 | strong |
| 3.29 | strong |
| 3.08 | average |
| 2.97 | average |
| 2.71 | weak |
| 2.46 | weak |
| 2.30 | average |
| 2.11 | weak |
| 1.92 | very strong |
| 1.81 | average |

said diagram being the result of a crystallization in at least one of the structures of Analcime, Gmelinite, Garronite, Harmotone, Gismondine and Phillipsite type.

2. A method of preparing an inorganic polymer according to Claim 1, characterized by the fact that it consists in preparing an aqueous mixture of alkaline silico-aluminate such that the molar ratios of the reaction products expressed in terms of oxide are within or equal to the following values:

| | |
|---|---|
| $(Na_2O, K_2O)/SiO_2$ | 0.20 to 0.28 |
| $SiO_2/Al_2O_3$ | 3.5 to 4.5 |
| $H_2O/(Na_2O, K_2O)$ | 15 to 17.5 |
| $(Na_2O, K_2O)/Al_2O_3$ | 0.8 to 1.20 |

then allowing the mixture to age at least one hour at room temperature.

3. A method of preparing an inorganic polymer according to Claim 1 or 2, characterized by the fact that, after the aging, the reaction mixture is placed in a mold and that the hardening is accelerated by bringing it to a temperature of less than 120°C and preferably between 60°C and 95°C.

4. A method of preparing a molded object by means of an inorganic polymer according to Claim 1, having the formula:

$$(Na)_n(-\underset{O}{\underset{|}{Si}}-O-\underset{O}{\underset{|}{Al}}-O-\underset{O}{\underset{|}{Si}}-O-)_n, wnH_2O,$$

characterized by the fact that it consists in preparing an aqueous mixture of alkaline silico-aluminate such that the molar ratios of the products expressed in terms of oxide correspond to the following values:

| | |
|---|---|
| $Na_2O/SiO_2$ | 0.28 |
| $SiO_2/Al_2O_3$ | 4.02 |
| $H_2O/Na_2O$ | 17.2 |
| $Na_2O/Al_2O_3$ | 1.14 |

then allowing it to age at room temperature for at least one hour, thereupon mixing with inorganic and organic fillers and effecting the hardening in a mold.

5. A method of preparing a molded object by means of an inorganic polymer according to Claim 1, having a formula:

$$(Na,\ K)_n(-\underset{\substack{|\\O}}{Si}-O-\underset{\substack{|\\O}}{Al}-O-\underset{\substack{|\\O}}{Si}-O-)_n,\ wnH_2O$$

characterized by the fact that it consists in preparing an aqueous mixture of alkaline silico-aluminate such that the molar ratios of the reaction products expressed in terms of oxides have the following values:

| | | |
|---|---|---|
| $(Na_2O,\ K_2O)/SiO_2$ | 0.25 | |
| $SiO_2/Al_2O_3$ | 4.02 | |
| $H_2O/(Na_2O,\ K_2O)$ | 17.3 | |
| $Na_2O/Al_2O_3$ | 0.8 to 0.5 | $\}(Na_2O,\ K_2O)/Al_2O_3=1$ |
| $K_2O/Al_2O_3$ | 0.2 to 0.5 | |

allowing it to age at room temperature for at least one hour, then mixing with inorganic and/or organic fillers and effecting the hardening in a mold.

6. A method according to any of Claims 2, 3, 4 and 5, characterized by the fact that the aqueous mixture of alkaline silico-aluminate contains an aluminosilicate oxide of the formula:

$$(Si_2O_5,\ Al_2O_2)_n$$

in which the aluminum cation is tetracoordinated.

7. A method according to Claim 6, characterized by preparing an aqueous solution containing an alkaline polysilicate and sodium hydroxide NaOH, or potassium hydroxide KOH, or a mixture of sodium hydroxide NaOH and potassium hydroxide KOH, and that the aluminosilicate oxide $(Si_2O_5,\ Al_2O_2)_n$ is dissolved in this solution.

8. A method according to Claim 6, characterized by preparing, on the one hand, a mixture of an alkaline polysilicate with aluminosilicate oxide $(Si_2O_5,\ Al_2O_2)_n$ and, on the other hand, an aqueous solution of sodium hydroxide NaOH, or potassium hydroxide KOH or sodium hydroxide NaOH and potassium hydroxide KOH, and adding the said aqueous solution to the said mixture.

9. A method of preparing molded objects containing an inorganic polymer according to Claim 1 and having ceramic properties, characterized by the fact that said inorganic polymer is dehydrated and dehydroxylated at a temperature at least equal to about 370°C.

10. A molded ceramic object containing an inorganic polymer according to Claim 1, obtained in accordance with any of Claims 2 to 9.